# EUROPÄISCHE PATENTSCHRIFT

(11) **EP 3 519 726 B1**
(45) Veröffentlichungstag und Bekanntmachung des Hinweises auf die Patenterteilung: **01.09.2021**
(21) Anmeldenummer: 17769059.1
(22) Anmeldetag: 18.09.2017
(51) Int. Cl.: F16N 21/04

(54) **KUPPLUNG FÜR DRUCKLEITUNGEN**
COUPLING FOR PRESSURE LINES
RACCORD POUR CONDUITES SOUS PRESSION

(30) Priorität: 27.09.2016 DE 202016105383 U
(43) Veröffentlichungstag der Anmeldung: 07.08.2019
(73) Patentinhaber: Maser, Frank, 33334 Gütersloh (DE)
(72) Erfinder: SALOMON, Thomas, 33425 Verl (DE); MASER, Frank, 33334 Gütersloh (DE)
(74) Vertreter: Ter Meer Steinmeister & Partner
(86) Internationale Anmeldenummer: PCT/EP2017/073489
(87) Internationale Veröffentlichungsnummer: WO 2018/059990

(56) Entgegenhaltungen:
- GB-A- 466 614
- US-A- 2 263 850
- US-A- 2 425 692
- US-A- 2 578 517
- US-A- 2 754 135
- US-A- 2 764 769

## Beschreibung

Die Erfindung betrifft eine Kupplung für Druckleitungen, mit einem Gehäuse, das einen durchgehenden Förderkanal für ein unter Druck stehendes Medium aufweist und mit einem Ende an eine Druckquelle anschließbar und mit dem entgegengesetzten Ende an einen Anschlussnippel ansetzbar ist, und mit um die Mündung des Förderkanals in den Anschlussnippel herum angeordneten Haltebacken, die durch einen Schließmechanismus in einer den Anschlussnippel umgreifenden Position fixierbar sind, wobei die Haltebacken sich jeweils auf einem Schwenklager abstützen und am vom Anschlussnippel abgewandten Ende, jenseits des Schwenklagers, einen Betätigungsarm aufweisen, der durch einen mit dem Druck des Mediums beaufschlagten Kolben im Sinne eines Schließens der Haltebacken betätigbar ist.

Insbesondere befasst sich die Erfindung mit einer Kupplung für eine Schmierleitung, über die Fett aus einer Fettpresse in einen Schmiernippel gedrückt wird.

Eine Kupplung der oben genannten Art ist aus US 2 578 517 A bekannt. Ein Beispiele für ähnliche Kupplungen werden in WO 2011/069172 A1 und US 2 578 517 A beschrieben.

Die Kupplung kann unmittelbar an den Ausgang einer Fettpresse angeschlossen werden oder über einen flexiblen Schlauch oder ein starres Rohr mit der Fettpresse verbunden werden und lässt sich so an einen Schmiernippel ankuppeln, dass Schmierfett in den Schmiernippel eingepresst werden kann. Mit zunehmendem Druck des Schmiermittels steigt die Gefahr, dass die Haltebacken nachgeben und die Kupplung sich von dem Schmiernippel ablöst. Bei einigen bekannten Kupplungen ist deshalb ein von Hand zu betätigender Verriegelungsmechanismus vorgesehen, der die Haltebacken in der Schließstellung verriegelt. Das macht jedoch die Handhabung der Kupplung umständlich.

Es sind auch Kupplungen bekannt, bei denen die Haltebacken selbsthemmend in der Schließstellung gehalten werden, so dass sie auch bei hohem Druck nicht nachgeben. In dem Fall ist es jedoch schwierig, die Kupplung nach Beendigung der Abschmierarbeiten wieder von dem Schmiernippel zu lösen.

Aufgabe der Erfindung ist es, eine Kupplung zu schaffen, die sich einfach an den Anschlussnippel ankuppeln und auch bei hohem Druck einfach wieder von dem Anschlussnippel lösen lässt, sich aber bei hohem Druck nicht selbsttätig löst.

Diese Aufgabe wird erfindungsgemäß dadurch gelöst, dass
das Schwenklager am äußeren Umfang einer Innenhülse gebildet ist, auf welcher der ringförmig ausgebildete Kolben verschiebbar ist,
eine Außenhülse die Haltebacken umschließt und zusammen mit der Innenhülse einen Ringraum bildet, über den der Druck des Mediums auf den Kolben wirkt,
die Außenhülse mit einem nach innen vorspringenden Bund verschiebbar auf der Innenhülse geführt ist und der Kolben sich an einer Stirnfläche des Bundes abstützt, während die entgegengesetzte Stirnfläche des Bundes den Ringraum begrenzt, und
die Innenhülse mit einem Endstück verbunden ist, auf dem eine Schiebehülse innerhalb eines begrenzten Bereiches axial verschiebbar geführt ist, wobei die Schiebehülse auch den äußeren Umfang der Außenhülse übergreift und einen Absatz aufweist, durch den die Außenhülse in der vom Kolben (weg weisenden Richtung zurückziehbar ist.

Wenn die Kupplung an den Anschlussnippel angekuppelt ist und der Druck des Mediums zunimmt, so wirkt auf die Kupplung eine Kraft, die die Tendenz hat, die Kupplung vom Anschlussnippel weg zu drücken. Da die Haltebacken einen konischen Abschnitt des Anschlussnippels umgreifen, wirkt auf diese Haltebacken ein Drehmoment, das die Tendenz hat, sie in Öffnungsrichtung zu verschwenken. Dieses Drehmoment wird jedoch dadurch kompensiert, dass durch den Kolben und den Betätigungsarm ein gegensinniges Drehmoment auf jede Haltebacke ausgeübt wird. Da beide einander entgegen wirkenden Drehmomente durch den Druck des Mediums verursacht werden und deshalb annähernd die gleiche Druckabhängigkeit aufweisen, lässt sich das System so ausbalancieren, dass die zum Abziehen der Kupplung von dem Anschlussnippel erforderliche Kraft von der Höhe des Mediumdruckes weitgehend unabhängig ist, so dass sich die Kupplung auch dann, wenn das Fett mit sehr hohem Druck eingepresst wurde, leicht wieder von dem Anschlussnippel lösen lässt. Beim Lösen der Kupplung lässt sich der Kolben mittels einer zurückziehbaren Schiebehülse vom Druck des Mediums entlasten.

Vorteilhafte Ausgestaltungen und Weiterbildungen der Erfindung sind in den Unteransprüchen angegeben.

In einer vorteilhaften Ausführungsform ist der Kolben ein Ringkolben, der den Förderkanal umgibt und in einem ringförmigen Zylinder beweglich ist, der über eine Radialbohrung mit dem Förderkanal in Verbindung steht, so dass der Druck des Mediums auf den Ringkolben wirken kann. Am vorderen Ende kann der Kolben einen konisch verjüngten Abschnitt aufweisen, der auf die Enden der Betätigungsarme wirkt und diese radial nach außen schwenkt, wenn der Kolben sich unter zunehmendem Druck des Mediums nach vorn bewegt. Die vor dem Schwenklager liegenden, als Greifklauen ausgebildeten Teile der Haltebacken schwenken dabei radial nach innen, so dass sie den Anschlussnippel fest umschließen.

Im folgenden wird ein Ausführungsbeispiel anhand der Zeichnung näher erläutert.

Es zeigen:
- Fig. 1: einen Längsschnitt durch eine Kupplung in eingekuppelter Stellung an einem Schmiernippel;
- Fig. 2: eine vergrößerte Schnittdarstellung des Schmiernippels und eines Teils der Kupplung in einem Zustand, in dem die Kupplung mit ihrem vorderen Ende an den Schmiernippel angesetzt ist;
- Fig. 3: eine Darstellung analog zu Fig. 2, jedoch für einen Zustand während des Ankuppelns der Kupplung;
- Fig. 4: eine Schnittdarstellung analog zu Fig. 2 und 3 für den eingekuppelten Zustand der Kupplung und
- Fig. 5 bis 8: Längsschnitte durch eine Kupplung gemäß einem Ausführungsbeispiel der Erfindung in unterschiedlichen Phasen während des Ein- und Auskuppelns.

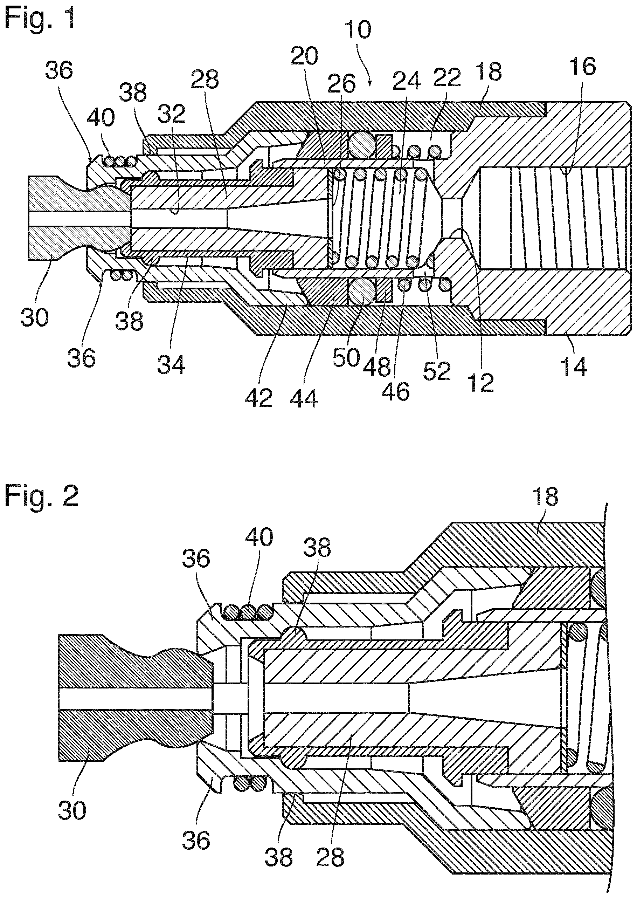

Die in Fig. 1 gezeigte Kupplung weist ein annähernd zylindrisches Gehäuse 10 auf, das von einem in Axialrichtung durchgehenden Förderkanal 12 durchsetzt wird. Ein rückwärtiger Teil des Gehäuses 10, rechts in Fig. 1, wird durch ein Endstück 14 gebildet, das eine Innengewindebohrung 16 aufweist, die es erlaubt, die Kupplung mit einem Auslass einer Fettpresse oder mit einem Schraubfitting eines Schmiermittelschlauches zu verschrauben, so dass Fett aus der Fettpresse in den Förderkanal 12 eintreten kann.

An das Endstück 14 schließt sich nach vorn eine Außenhülse 18 an, die eine in einem Stück mit dem Endstück 14 ausgebildete Innenhülse 20 mit Abstand umgibt, so dass zwischen der Innenhülse 20 und der Außenhülse 18 ein Ringraum 22 gebildet wird.

Die Innenhülse 20 umschließt einen im Durchmesser erweiterten Abschnitt des Förderkanals 12, der eine Feder 24, eine Scheibe 26 und einen Abdichtstopfen 28 aufnimmt. Der Abdichtstopfen 28 besteht aus einem elastomeren Material und ragt nach vorn aus der Innenhülse 20 heraus, so dass er sich mit seiner vorderen Stirnfläche an einer Stirnfläche eines Anschlussnippels 30 (im folgenden als Schmiernippel 30 bezeichnet) abstützen kann. In dem Abdichtstopfen ist ein in axialer Richtung durchgehender Kanal 32 gebildet, der den Förderkanal 12 verlängert und am vorderen Ende in eine Bohrung des Schmiernippels 30 mündet.

Der vordere Teil des Abdichtstopfens 28 ist von einer Druckhülse 34 umgeben, die mit ihrem rückwärtigen Ende verschiebbar im vorderen Ende der Innenhülse 20 geführt ist und am vorderen Ende mit einem Innenbund über die Stirnfläche des Abdichtstopfens greift. Durch die Feder 24 werden der Abdichtstopfen 28 und die Druckhülse 34 nach vorn, also nach links in Fig. 1 vorgespannt.

Die Druckhülse 34 ist von mindestens drei auf dem Umfang verteilten Haltebacken 36 umgeben, die einen sich konisch verjüngenden Teil des Schmiernippels 30 übergreifen. Jede Haltebacke 36 ist in einem Schwenklager 38 gelagert, das durch einen Wulst auf der Außenfläche der Druckhülse 34 und eine diesem Wulst gegenüberliegende Nase am vorderen Ende der Außenhülse 18 gebildet wird. Die beiden in Fig. 1 sichtbaren Haltebacken 36 sind deshalb zwischen dem Wulst und der Nase des Schwenklagers 38 um eine rechtwinklig zur Längsachse der Kupplung, in Fig. 1 senkrecht zur Zeichenebene verlaufende Achse schwenkbar. Die vor den Schwenklagern 38 gelegenen Teile der Haltebacken 36 bilden jeweils eine Greifklaue und werden durch eine diese Greifklauen umschlingende Feder 40 (Schraubenfeder) radial gegen den Konus des Schmiernippels 30 gespannt.

Der hinter dem Schwenklager 38 gelegene Teil jeder Haltebacke 36 bildet einen Betätigungsarm 42, der durch die Wirkung der Feder 40 und des Schwenklagers 38 radial nach außen geschwenkt wird und deshalb in Fig. 1 an der Innenwand der Außenhülse 18 anliegt.

In dem Ringraum 22 zwischen der Außenhülse 18 und der Innenhülse 20 sind ein ringförmiger Kolben 44 und eine Feder 46 (Schraubenfeder) angeordnet. Die Feder 46 stützt sich an einer Schulter des Endstücks 14 ab und drückt mit ihrem vorderen Ende über eine Scheibe 48 und einen Dichtring 50 auf den Kolben 44, dessen leicht konische vordere Stirnfläche dadurch gegen die freien Enden der Betätigungsarme 42 gespannt wird. Der hintere, die Feder 46 aufnehmende Teil des Ringraums 22 ist über eine radial durch die Innenhülse 20 verlaufende Querbohrung 52 mit dem Förderkanal 12 verbunden.

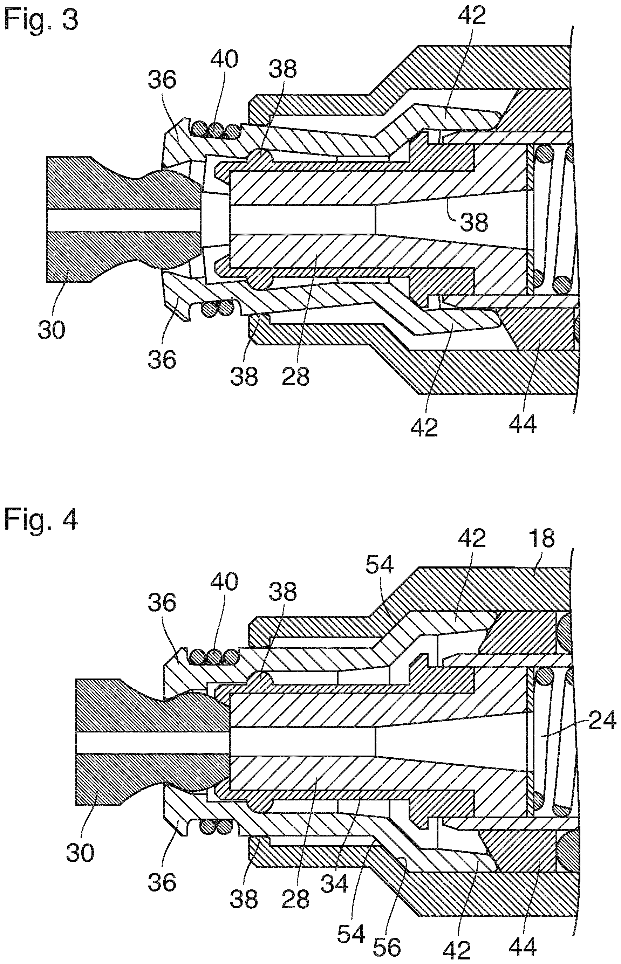

Wenn die Kupplung an den Schmiernippel 30 angekuppelt werden soll, so wird sie zunächst in der in Fig. 2 gezeigten Weise mit ihrem vorderen Ende an den Schmiernippel 30 angesetzt. Die Haltebacken 36 werden durch die Feder 40 in einer Schließstellung gehalten, in der ihre vorderen, die Greifklauen bildenden Enden radial nach innen geschwenkt sind. In Fig. 2 stoßen deshalb die radial inneren Kanten der Haltebacken 36 an dem sich konisch erweiternden Endabschnitt des Schmiernippels 30 an, so dass die Stirnfläche des Schmiernippels noch nicht mit der Stirnfläche des Abdichtstopfens 28 in Anlage kommen kann. Wenn nun die Kupplung mit einer gewissen Kraft gegen den Schmiernippel angedrückt wird, so werden die Haltebacken 36 durch den Konus des Schmiernippels am vorderen Ende gespreizt, so dass sie entgegen der Kraft der Feder 40 um die Schwenklager 38 schwenken, wie in Fig. 3 gezeigt ist. Die Betätigungsarme 42 bewegen sich dabei radial nach innen und gleiten mit ihren freien Enden an der konischen Stirnfläche des Kolbens 44 entlang, so dass der Kolben entgegen der Kraft der Feder 46 zurückgedrückt wird. Der Konus der Stirnfläche des Kolbens 44 ist so steil, dass dabei keine Selbsthemmung auftritt.

Wenn die Kupplung über die in Fig. 3 gezeigte Position hinaus weiter nach links geschoben wird, so gleiten die Greifklauen der Haltebacken 36 über die dickste Stelle des Schmiernippels hinweg, so dass sie sich unter der Kraft der Feder 40, unterstützt durch die auf die Betätigungsarme 42 wirkende Kraft der Feder 46, wieder radial nach innen bewegen und dabei an der sich konisch verjüngenden Umfangsfläche des Schmiernippels entlang gleiten und die Kupplung an den Schmiernippel heranziehen, bis die in Fig. 4 gezeigte Position erreicht ist. Die Betätigungsarme 42 liegen dann wieder an der Innenfläche der Außenhülse 18 an, und die vordere Stirnfläche des Abdichtstopfens 28 legt sich gegen die Stirnfläche des Schmiernippels 30. Gegebenenfalls werden dabei der Abdichtstopfen 28 und die Druckhülse 34 entgegen der Kraft der Feder 24 etwas zurückgedrückt, so dass eine dichte Anlage des Abdichtstopfens 28 am Schmiernippel 30 sichergestellt ist.

Wenn nun Fett aus der Fettpresse ausgepresst wird, so fließt das Fett durch den Förderkanal 12 und durch den Kanal 32 des Abdichtstopfens in den Schmiernippel, ohne dass an der Stoßstelle zwischen dem Abdichtstopfen 24 und dem Schmiernippel Fett austritt.

Wenn sich in dem Förderkanal 12 ein gewisser Fettdruck aufbaut, so hat dieser Druck die Tendenz, den Schmiernippel 30 und die Kupplung auseinander zu drücken. Ohne weitere Gegenmaßnahmen würde sich deshalb bei zunehmendem Druck die Kupplung nach rechts in Fig. 4 bewegen, wodurch die Haltebacken 36 wieder in Löserichtung geschwenkt würden. Da jedoch das Fett durch die Querbohrung 52 (Fig. 1) auch in den Ringraum 22 auf der Rückseite des Kolbens 44 eindringt, wird auch der Kolben 44 mit dem Fettdruck beaufschlagt, und dieser Druck hat die Tendenz, den Kolben nach links in Fig. 4 zu verschieben und fest gegen die Enden der Betätigungsarme 42 anzudrücken. Aufgrund der konischen Gestalt der Stirnfläche des Kolbens werden die Betätigungsarme 42 in der gespreizten Stellung gehalten, und ein Verschwenken der Haltebacken 36 um die Schwenklager 38 braucht somit nicht allein durch die Feder 40 verhindert zu werden, sondern wird auch durch den auf die Betätigungsarme 42 wirkenden Druck des Kolbens erschwert. Der Druck des Fettes bewirkt somit einerseits aufgrund der Kraft, die die Kupplung und den Schmiernippel 30 auseinander treibt, und aufgrund der konischen Form des Schmiernippels ein Drehmoment, das in Löserichtung auf die Haltebacken 36 wirkt, zugleich jedoch über den Kolben 44 auch ein Gegendrehmoment in Schließrichtung der Haltebacken.

Die Wirkfläche des Kolbens 44, der Konus an der Stirnfläche dieses Kolbens, die Länge der durch die Betätigungsarme 42 und die Greifklauen der Haltebacken 36 gebildeten Hebelarme sowie die Kraft der Feder 40 sind so aufeinander abgestimmt, dass die beiden gegeneinander wirkenden Drehmomente unabhängig vom jeweils herrschenden Druck des Fettes annähernd ausbalanciert sind, mit einem leichten Übergewicht für das Drehmoment in Schließrichtung, so dass die Kupplung sicher auf dem Schmiernippel gehalten wird.

Wenn der Abschmiervorgang beendet ist und die Kupplung vom Schmiernippel 30 gelöst werden soll, so bleibt im allgemeinen der Druck im Förderkanal 12 bestehen, da ein Rückschlagventil in der Fettpresse den Rückfluss des Fettes verhindert. Damit bleibt auch zunächst das annähernde Drehmomentgleichgewicht bestehen.

Die Betätigungsarme 42 sind jeweils so angewinkelt, dass sie zusammen einen Außenkonus 54 bilden (Fig. 4), der an einem dazu komplementären Innenkonus 56 an der Innenfläche der Außenhülse 18 anliegt. Wenn nun die Kupplung von Hand von dem Schmiernippel 30 abgezogen wird, so haben die Haltebacken 36 die Tendenz, den Schmiernippel festzuhalten, so dass sich das Gehäuse 10 relativ zu den Haltebacken nach rechts in Fig. 4 verschiebt. Dabei verursachen die Konen 54, 56 ein zusätzliches Drehmoment in Öffnungsrichtung, so dass die Betätigungsarme 42 radial nach innen schwenken und dementsprechend die Greifklauen den Schmiernippel 30 freigeben. Durch die freien Enden der Betätigungsarme 42 wird dabei der Kolben 44 zurückgedrückt.

Sobald sich zwischen der Stirnfläche des Abdichtstopfens 28 und der Stirnfläche des Schmiernippels 30 ein kleiner Spalt gebildet hat, dringt das noch unter Druck stehende Fett in diesen Spalt ein, wodurch die Kraft verstärkt wird, die den Schmiernippel und die Kupplung auseinander treibt. Zugleich wird dabei der Druck im Förderkanal und im Ringraum 24 abgebaut, so dass sich der Kolben 44 leichter zurückschieben lässt. Sobald die inneren Kanten der Haltebacken 36 den Wulst des Schmiernippels 30 passiert haben, unterstützt auch die Feder 40 die weitere Abziehbewegung, und die Haltebacken 36 kehren in die in Fig. 2 gezeigte Stellung zurück.

Die Haltebacken 36 werden durch den Außenkonus 54 und den Innenkonus 56 unverlierbar in dem Gehäuse 10 gehalten und bilden ein Widerlager für die Wülste der Schwenklager 38. Auf diese weise werden auch die Druckhülse 34 und der Abdichtstopfen 28 unverlierbar im Gehäuse gehalten.

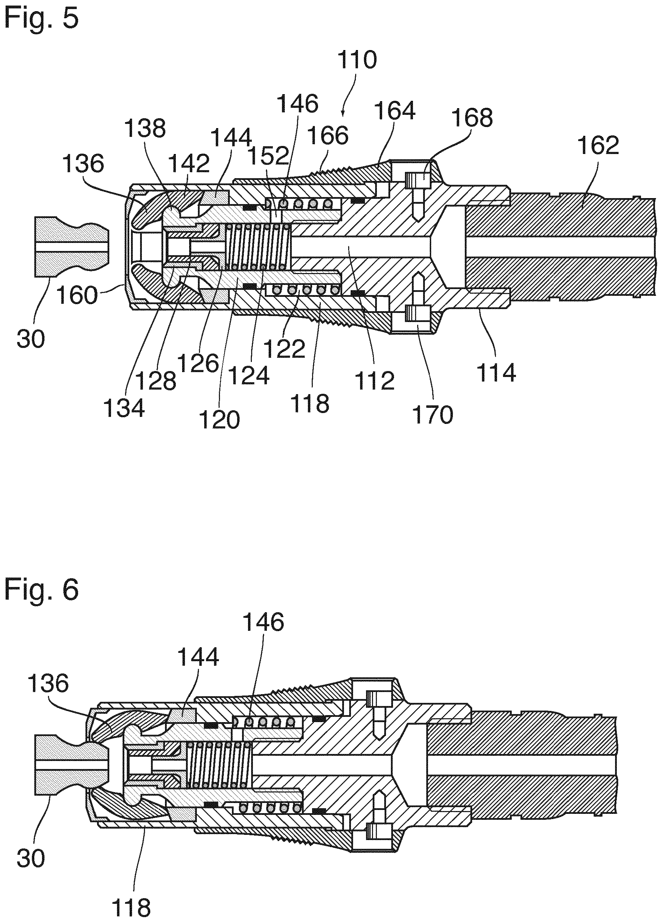

In Fig. 5 ist eine Kupplung gemäß einem Ausführungsbeispiel der Erfindung gezeigt. Einzelheiten dieser Kupplung, die in ihrer Funktion den bereits im Zusammenhang mit Figuren. 1 bis 4 beschriebenen Einzelheiten entsprechen, sind mit den gleichen Bezugszeichen bezeichnet, jedoch um 100 erhöht. Die Kupplung weist somit ein Gehäuse 110 auf, mit einem Förderkanal 112, einem Endstück 114, einer Außenhülse 118, einer Innenhülse 120, die mit der Außenhülse einen Ringraum 122 bildet, einer Feder 124 zwischen dem Endstück 114 und einem Widerlager 126, das funktionell der Scheibe 26 in Fig. 1 entspricht, sowie einem Abdichtstopfen 128, einer Druckhülse 134, Haltebacken 136 mit Betätigungsarmen 142, einem Kolben 144 und einer Feder 146 in dem Ringraum 122.

Anders als in Figuren 1 bis 4 ist die Innenhülse 120 mit dem Endstück 114 verschraubt, und die Außenhülse 118 ist auf der Innenhülse 120 und dem Endstück 114 axial verschiebbar. Der Ringraum 122 ist an beiden Enden abgedichtet, und die Feder 146 stützt sich an einem nach innen vorspringenden Bund der Außenhülse 118 ab, der seinerseits den Kolben 144 abstützt.

Schwenklager 138 für die Haltebacken 136 werden durch radial nach außen vorspringende Wülste am vorderen Ende der Innenhülse 120 gebildet. Die Außenhülse 118 bildet in ihrem vorderen Teil kein Schwenklager für die Haltebacken, sondern begrenzt lediglich den Schwenkbereich der Betätigungsarme 142 und die Auswärtsbewegung der haltebacken.

Am vorderen Ende ist das Gehäuse 110 durch eine Abschlusskappe 160 abgeschlossen, die axial verschiebbar im vorderen Ende der Außenhülse 118 geführt und in den Zwischenräumen zwischen den Haltebacken 136 mit hier nicht erkennbaren Haltearmen an den Wülsten der Innenhülse 120 fixiert ist, die die Schwenklager 138 bilden. Eine zentrale Bohrung der Endkappe 160 hat einen Innendurchmesser, der größer ist als der Außendurchmesser des Wulstes des Schmiernippels 30, so dass sich das Gehäuse 110 mit seiner Endkappe 160 über den Schmiernippel schieben lässt, bis die Haltebacken 136 auf den Schmiernippel aufgleiten.

In das Endstück 114 ist in diesem Beispiel am rückwärtigen Ende ein Anschlussstück 162 für einen Schmiermittelschlauch eingeschraubt.

Auf der Außenhülse 118 ist eine Schiebehülse 164 geführt, die auf ihren konischen Flanken eine Riffelung 166 aufweist. Der Verschiebeweg der Schiebehülse 164 auf der Außenhülse 118 wird durch die Köpfe von Schrauben 168 begrenzt, die radial in die Außenhülse 118 eingeschraubt und in Langlöchern 170 der Schiebehülse aufgenommen sind. In dem in Fig. 5 gezeigten Ausgangszustand, vor dem Ankuppeln an den Schmiernippel 30, befindet sich die Schiebehülse 164 in ihrer vorderen Endlage.

Fig. 6 zeigt die Kupplung in dem Zustand, in dem sie auf dem Schmiernippel 30 aufgeschoben wird. Die vorderen Enden der Haltebacken 136 gleiten auf die Flanken des Schmiernippels auf und werden um die Drehlager 138 nach außen geschwenkt. Ihre Betätigungsarme 142 drücken dabei auf die konische vordere Endfläche des Kolbens 144 und schieben diesen gemeinsam mit der Außenhülse 118 entgegen der Kraft der Feder 146 nach hinten.

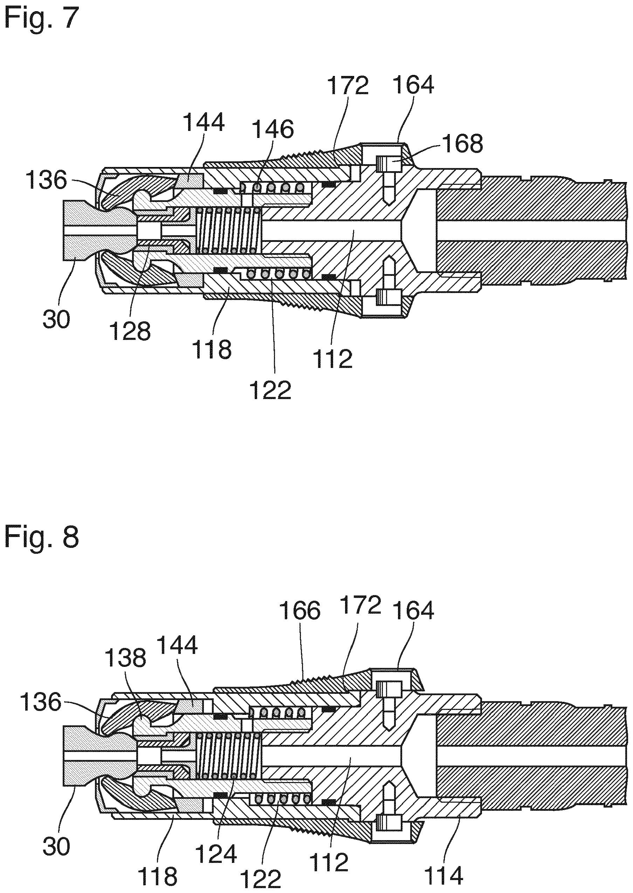

Fig. 7 zeigt den Zustand, in dem die Kupplung ganz auf dem Schmiernippel 30 aufgesteckt ist und das Fett im Förderkanal 112 unter Druck gesetzt wurde. Die Haltebacken 136 umgreifen den Wulst des Schmiernippels und werden durch den Kolben 144 in ihre Schließstellung vorgespannt. Auf den Kolben wirkt dabei eine axiale Kraft, die durch den Bund der Außenhülse 118 übertragen wird und zum einen durch die Kraft der Feder 146 und zum anderen durch den Druck des Schmiermittels im Ringraum 122 erzeugt wird, der auf die hintere Stirnfläche des Bundes der Außenhülse 118 wirkt. Die Außenhülse 118 und der Kolben 144 sind dadurch gemeinsam nach vorn (nach links in Fig. 7) verschoben worden. Die Bewegung der Außenhülse 118 wird durch einen am äußeren Umfang gebildeten Anschlag begrenzt, der mit einem entsprechenden Absatz 172 der Schiebehülse 164 zusammenwirkt, die ihrerseits durch die Schrauben 168 in ihrer vorderen Endlage gehalten wird. Der Abdichtstopfen 128 wird durch die Feder 124 in dichter Anlage an der vorderen Stirnfläche des Schmiernippels 30 gehalten.

Der Druck des Schmiermittels im Förderkanal 112 hat die Tendenz, die gesamte Kupplung von der vorderen Stirnfläche des Schmiernippels 30 wegzudrücken und dabei die Haltebacken 36 nach außen zu verschwenken. Dem wirkt jedoch die von dem Kolben 144 auf die Haltebacken ausgeübte Kraft entgegen. Die Federkräfte und Kolbenwirkflächen sind wie bei dem zuvor beschriebenen Ausführungsbeispiel so ausbalanciert, dass das in Schließrichtung auf die Haltebacken 136 wirkende Drehmoment, ausgeübt durch den Kolben 144, stets geringfügig größer ist als das in Gegenrichtung wirkende Drehmoment, das durch den Druck im Förderkanal 112 verursacht wird. Wenn der Druck des Schmiermittels ansteigt, so steigt damit auch der Druck im Ringraum 122 an, und das Verhältnis zwischen den in entgegengesetzte Richtungen auf die Haltebacken wirkenden Drehmomenten bleibt im wesentlichen konstant.

Wenn die Kupplung wieder vom Schmiernippel 30 gelöst werden soll, so wird die Schiebehülse 164 an den Riffelungen 166 erfasst und von Hand nach hinten gezogen, wie in Fig. 8 gezeigt ist. Durch den Absatz 172 wird dabei auch die Außenhülse 118 mitgenommen, entgegen der Kraft der Feder 146 und des Druckes im Ringraum 122. Die dazu von Hand auf die Schiebehülse 164 auszuübende Kraft ist auch bei hohem Schmiermitteldruck relativ gering, da der Druck im Ringraum 122 im wesentlichen durch den Druck des Schmiermittels im Förderkanal 112 ausbalanciert wird.

Wenn die Außenhülse 118 ihre rückwärtige Endlage erreicht hat und am Endstück 114 anstößt, wird über das Endstück 114, die Innenhülse 120 und die Schwenklager 138 auch ein Zug auf die Haltebacken 136 ausgeübt, so dass diese vom Schmiernippel abgezogen werden. Die dazu notwendige Auswärts-Schwenkbewegung der Haltebacken wird dadurch erleichtert, dass der Kolben 144 druckentlastet ist. In Fig. 8 wird dies dadurch verdeutlicht, dass zwischen dem Kolben 144 und dem Bund der Außenhülse 118 ein axialer Zwischenraum besteht. In der Praxis wird dieser Zwischenraum jedoch durch eine entsprechende Schwenkbewegung der Haltebacken 136 und eine entsprechende Rückwärtsbewegung des Kolbens 144 sofort wieder geschlossen werden. Die Rückwärtsbewegung der Kupplung wird durch den Druck im Förderkanal 112 unterstützt.

In der Anfangsphase der Rückzugsbewegung wird der Abdichtstopfen 128 weiterhin an der Stirnfläche des Schmiernippels 30 in Anlage gehalten. Da dieser Abdichtstopfen aus gummielastischem Material besteht, kann er etwas komprimiert werden, so dass das Volumen des von der Feder 124 eingenommenen Abschnitts des Förderkanals sich etwas vergrößern kann, um das zusätzliche Schmiermittel aufzunehmen, das beim Zurückziehen der Schiebehülse 164 und der Außenhülse 118 aus dem Ringraum 122 verdrängt wird.

Im weiteren Verlauf der Rückzugsbewegung gleiten die Haltebacken 136 wieder über den Wulst des Schmiernippels 30 hinweg, wodurch sich das Volumen des Förderkanals 112 vergrößert und der Druck des Schmiermittels abgebaut wird.

## Patentansprüche

1. Kupplung für Druckleitungen, mit einem Gehäuse (110), das einen durchgehenden Förderkanal (112) für ein unter Druck stehendes Medium aufweist und mit einem Ende an eine Druckquelle anschließbar und mit dem entgegengesetzten Ende an einen Anschlussnippel (30) ansetzbar ist, und mit um die Mündung des Förderkanals in den Anschlussnippel (30) herum angeordneten Haltebacken (136), die durch einen Schließmechanismus in einer den Anschlussnippel (30) umgreifenden Position fixierbar sind, wobei die Haltebacken (136) sich jeweils auf einem Schwenklager (138) abstützen und am vom Anschlussnippel (30) abgewandten Ende, jenseits des Schwenklagers (138), einen Betätigungsarm (142) aufweisen, der durch einen mit dem Druck des Mediums beaufschlagten Kolben (144) im Sinne eines Schließens der Haltebacken (136) betätigbar ist, **dadurch gekennzeichnet, dass**
das Schwenklager (138) am äußeren Umfang einer Innenhülse (120) gebildet ist, auf welcher der ringförmig ausgebildete Kolben (144) verschiebbar ist,
eine Außenhülse (118) die Haltebacken (136) umschließt und zusammen mit der Innenhülse (120) einen Ringraum (122) bildet, über den der Druck des Mediums auf den Kolben (144) wirkt,
die Außenhülse (118) mit einem nach innen vorspringenden Bund verschiebbar auf der Innenhülse (120) geführt ist und der Kolben (144) sich an einer Stirnfläche des Bundes abstützt, während die entgegengesetzte Stirnfläche des Bundes den Ringraum (122) begrenzt, und
die Innenhülse (120) mit einem Endstück (114) verbunden ist, auf dem eine Schiebehülse (164) innerhalb eines begrenzten Bereiches axial verschiebbar geführt ist, wobei die Schiebehülse (164) auch den äußeren Umfang der Außenhülse (118) übergreift und einen Absatz (172) aufweist, durch den die Außenhülse (118) in der vom Kolben (144) weg weisenden Richtung zurückziehbar ist.

2. Kupplung nach Anspruch 1, bei der Ringraum (122) den Förderkanal (112) ringförmig umgibt und durch eine Querbohrung (152) mit dem Förderkanal verbunden ist.

3. Kupplung nach Anspruch 2, bei der der Kolben am vorderen, dem Anschlussnippel (30) zugewandten Ende eine konische Stirnfläche aufweist, mit der er an den Enden der Betätigungsarme (142) der Haltebacken (136) anliegt.

4. Kupplung nach Anspruch 3, bei der der Kolben (144) durch eine Feder (146) in Richtung auf die Betätigungsarme (142) vorgespannt ist.

5. Kupplung nach einem der vorstehenden Ansprüche, bei der in dem Gehäuse (110) ein Abdichtstopfen (128) angeordnet ist, der eine zur Anlage an dem Anschlussnippel (30) vorgesehene Stirnfläche aufweist und in dem ein in Axialrichtung durchgehender Kanal gebildet ist, über den der Förderkanal (112) in den Anschlussnippel (30) mündet.

6. Kupplung nach einem der vorstehenden Ansprüche, mit einer Feder (146), die den Kolben (144), gegebenenfalls zusammen mit der Außenhülse (118), in Richtung auf die Haltebacken (136) vorspannt.

7. Kupplung nach einem der vorstehenden Ansprüche, bei der eine Wirkfläche, über welche der Druck des Mediums auf den Kolben (144) wirkt, so dimensioniert ist, dass die auf den Kolben (144) wirkende Kraft und eine Kraft, die aufgrund des Druckes des Mediums die Tendenz hat, die Kupplung von Anschlussnippel (30) wegzudrücken, in dem Sinne ausbalanciert sind, dass die in Schließrichtung auf die Haltebacken (136) wirkende Kraft unabhängig vom Druck des Mediums nur um so viel größer ist als die in Gegenrichtung wirkende Kraft, dass die Kupplung von Hand in einer rein axialen Bewegung vom Anschlussnippel abgezogen werden kann.

## Claims

1. A coupling for pressure lines, having a housing (110) which has a continuous conveying duct (112) for a pressurised medium and can be connected by one end to a pressure source and attached by the opposite end to a connection nipple (30), and having retaining jaws (136) which are arranged around the mouth of the conveying duct opening into the connection nipple (30) and which can be fixed by a locking mechanism in a position in which they engage around the connection nipple (30), wherein the retaining jaws (136) are each supported on a pivot bearing (138) and have, at the end remote from the connection nipple (30), beyond pivot bearing (138), an actuating arm (142) which can be actuated, in order to close the retaining jaws (136), by means of a piston (144) subjected to the pressure of the medium, **characterized in that**
the pivot bearing (138) is formed at an outer periphery of an inner sleeve (120) on which the annular piston (144) is slidable,
an outer sleeve (118) encloses the retaining jaws (136) and, together with the inner sleeve (120), forms an annular space (122) via which the pressure of the medium acts upon the piston (144), the outer sleeve (118) has an inwardly projecting collar with which it is slidingly guided on the inner sleeve (120), and the piston (144) is supported at an end face of the collar whereas an opposite end face of the collar delimits the annular space (122), and
the inner sleeve (120) is connected to an end piece (114) on which a sliding sleeve (164) is guided for sliding axial movement within a limited range, said sliding sleeve (164) is straddling also the outer periphery of the outer sleeve (118) and has a step (172) by which the outer sleeve (118) can be drawn back in the direction facing away from the piston (144).

2. The coupling according to claim 1, wherein the annular space (122) annularly surrounds the conveying duct (112) and is connected to the conveying duct by a cross-bore (152).

3. The coupling according to claim 2, wherein the piston has, at its front end facing the connection nipple (30), a conical end face with which it engages the ends of the actuating arms (142) of the retaining jaws (136).

4. The coupling according to claim 3, wherein the piston (144) is biased in the direction of the actuating arms (142) by a spring (146).

5. The coupling according to any of the preceding claims, wherein a sealing plug (128) is arranged in the housing (110), the sealing plug having an end face for engagement with the connection nipple (30) and having a continuous axial passage via which the conveying duct (112) opens into the connection nipple (30).

6. The coupling according to any of the preceding claims, having a spring (146) which biases the piston (144) in the direction of the retaining jaws (136), together with the outer sleeve (118), if present.

7. The coupling according to any of the preceding claims, wherein an effective area via which the pressure of the medium acts upon the piston (144) is dimensioned such that the force acting upon the piston (144) and a force which, due to the pressure of the medium, has the tendency to urge the coupling away from the connecting nipple (30), are balanced in the sense that the force acting in closing direction of the retaining jaws (136) exceeds the force acting in the opposite direction, independently of the pressure of the medium, only by an amount assuring that the coupling can be drawn-off from the connection nipple by hand in a purely axial movement.

## Revendications

1. Raccord pour des conduites sous pression, comportant un boîtier (110) ayant un canal de transport continu (112) pour un fluide sous pression, à une extrémité duquel une source de pression peut être raccordée et à l'extrémité opposée duquel un mamelon de raccordement (30) peut être fixé, et comportant des mâchoires de retenue (136) agencées autour de l'embouchure du canal de transport dans le mamelon de raccordement (30) et pouvant être fixées par un mécanisme de fermeture dans une position en prise autour du mamelon de raccordement (30), dans lequel les mâchoires de retenue (136) sont respectivement en appui sur un palier de pivotement (138) et comportent, au niveau de l'extrémité opposée au mamelon de raccordement (30) et au-delà du palier de pivotement (138), un bras d'actionnement (142) qui peut être actionné par un piston (144) soumis à la pression du fluide dans le sens d'une fermeture des mâchoires de retenue (136), **caractérisé en ce que**
le palier de pivotement (138) est formé sur la périphérie extérieure d'une douille intérieure (120) sur laquelle le piston annulaire (144) peut coulisser,
une douille extérieure (118) entoure les mâchoires de retenue (136) et forme, en association avec la douille intérieure (120), un espace annulaire (122) par l'intermédiaire duquel la pression du fluide agit sur le piston (144),
la douille extérieure (118) est guidée de manière coulissante sur la douille intérieure (120) avec une collerette faisant saillie vers l'intérieur et le piston (144) est en appui sur une face frontale de la collerette, tandis que la face frontale opposée de la collerette délimite l'espace annulaire (122), et
la douille intérieure (120) est reliée à une pièce d'extrémité (114) sur laquelle une douille coulis-santé (164) est guidée dans une zone délimitée de manière à pouvoir coulisser axialement, dans lequel la douille coulissante (164) recouvre également la périphérie extérieure de la douille extérieure (118) et comporte un gradin (172) par l'intermédiaire duquel la douille extérieure (118) peut être retirée dans la direction s'éloignant du piston (144).

2. Raccord selon la revendication 1, dans lequel l'espace annulaire (122) entoure le canal de transport (112) de manière annulaire et est relié au canal de transport par un alésage transversal (152).

3. Raccord selon la revendication 2, dans lequel le piston comporte, au niveau de l'extrémité avant dirigée vers le mamelon de raccordement (30), une face frontale conique avec laquelle il vient en butée contre les extrémités des bras d'actionnement (142) des mâchoires de retenue (136).

4. Raccord selon la revendication 3, dans lequel le piston (144) est rappelé par un ressort (146) en direction des bras d'actionnement (142).

5. Raccord selon l'une des revendications précédentes, dans lequel un bouchon d'étanchéité (128) est agencé dans le boîtier (110), lequel bouchon d'étanchéité comporte une face frontale destinée à venir en appui sur le mamelon de raccordement (30) et dans lequel un canal continu est formé dans une direction axiale, par l'intermédiaire duquel le canal de transport (112) débouche dans le mamelon de raccordement (30).

6. Raccord selon l'une des revendications précédentes, comportant un ressort (146) qui rappelle le piston (144), le cas échéant en association avec la douille extérieure (118), en direction des mâchoires de retenue (136).

7. Raccord selon l'une des revendications précédentes, dans lequel une surface active, par l'intermédiaire de laquelle la pression du fluide agit sur le piston (144), est dimensionnée de sorte que la force agissant sur le piston (144) et une force qui a, en raison de la pression du fluide, tendance à pousser le raccord pour l'écarter du mamelon de raccordement (30), sont équilibrées dans le sens où la force agissant sur les mâchoires de retenue (136) dans la direction de fermeture n'est supérieure à la force agissant dans la direction opposée, indépendamment de la pression du fluide, que d'une quantité telle que le raccord peut être extrait manuellement du mamelon de raccord dans un mouvement purement axial.
